# FASCICULE DE BREVET EUROPEEN

(11) **EP 0 967 097 B1**
(45) Date de publication et mention de la délivrance du brevet: **21.05.2003**
(21) Numéro de dépôt: 99401274.8
(22) Date de dépôt: 27.05.1999
(51) Int. Cl.: B60J 5/04, B60R 13/02

(54) **Porte de véhicule automobile et module pour cette porte**
Kraftfahrzeugtür und Modul dafür
Motor vehicle door and module therefor

(30) Priorité: 22.06.1998 FR 9807858
(43) Date de publication de la demande: 29.12.1999
(73) Titulaire: ECIA - EQUIPEMENTS ET COMPOSANTS POUR L'INDUSTRIE AUTOMOBILE, F-25400 Audincourt (FR)
(72) Inventeur: Heranney, Yves, 25200 Montbeliard (FR)
(74) Mandataire: Moncheny, Michel

(56) Documents cités:
- EP-A- 0 686 531
- EP-A- 0 694 427
- WO-A-97/45283
- DE-A- 2 426 705
- US-A- 5 111 619

## Description

La présente invention concerne une porte de véhicule automobile et un module pour cette porte.

Conformément au préambule de la revendication1, elle s'applique en particulier à une porte de véhicule automobile du type comprenant une partie inférieure, formant un caisson, et une partie supérieure, formant un cadre délimitant une baie obturable par une vitre déplaçable à travers une fente du caisson, le caisson comportant une paroi métallique externe, une doublure métallique interne et un panneau interne de garnissage en matériau synthétique.

DE-A-2 426 705 décrit une telle porte.

L'invention a pour but d'optimiser les opérations de montage d'une telle porte de véhicule automobile.

A cet effet, l'invention a pour objet une porte de véhicule automobile selon la revendication 1.

Les revendications dépendantes 2 à 11 précisent d'autres caractéristiques optionnelles de cette porte.

L'invention a également pour objet un module pour porte de véhicule automobile suivant la revendication 12.

La revendication 13 précise une caractéristique optionnelle de ce module.

L'invention sera mieux comprise à la lecture de la description qui va suivre donnée uniquement à titre d'exemple et faite en se référant aux dessins dans lesquels :
- la figure 1 est une vue en perspective d'une porte de véhicule automobile, selon l'invention ;
- la figure 2 est une vue en perspective éclatée de la porte représentée à la figure 1 ;
- la figure 3 est une vue de l'insert métallique sur lequel est surmoulé le panneau de garnissage de la porte représentée sur la figure 1 ;
- les figures 4 à 6 sont des vues en coupe transversale suivant respectivement trois plans se succédant de la gauche vers la droite en considérant la figure 2 ;
- la figure 7 est une vue de détail, à échelle agrandie, de la partie cerclée 7 de la figure 5, les moyens d'accrochage de la vitre sur le chariot étant en position active ;
- la figure 8 est une vue similaire à la figure 7, les moyens d'accrochage de la vitre sur le chariot étant en position libérée.

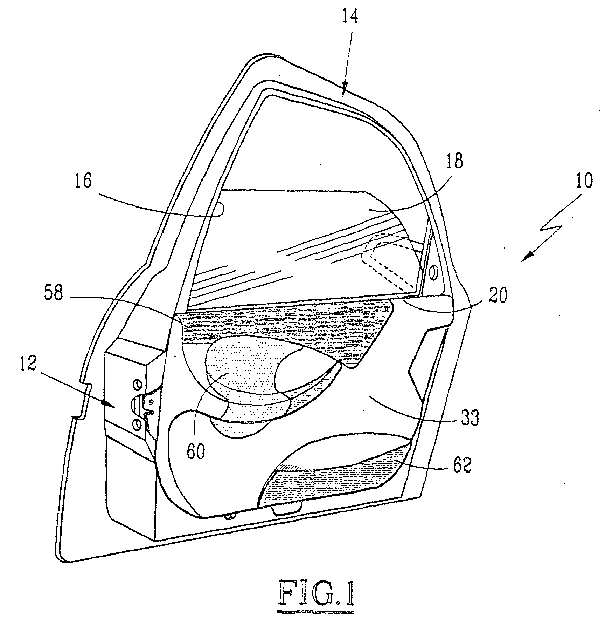

On a représenté sur la figure 1 une porte de véhicule automobile selon l'invention, désignée par la référence générale 10.

Cette porte 10 comprend une partie inférieure formant un caisson 12 et une partie supérieure formant un cadre délimitant une baie 16 obturable par une vitre 18.

De façon classique, la vitre 18 est déplaçable, à travers une fente 20 du caisson 12, entre une position basse d'escamotage à l'intérieur de ce caisson 12 et une position haute d'obturation de la baie 16.

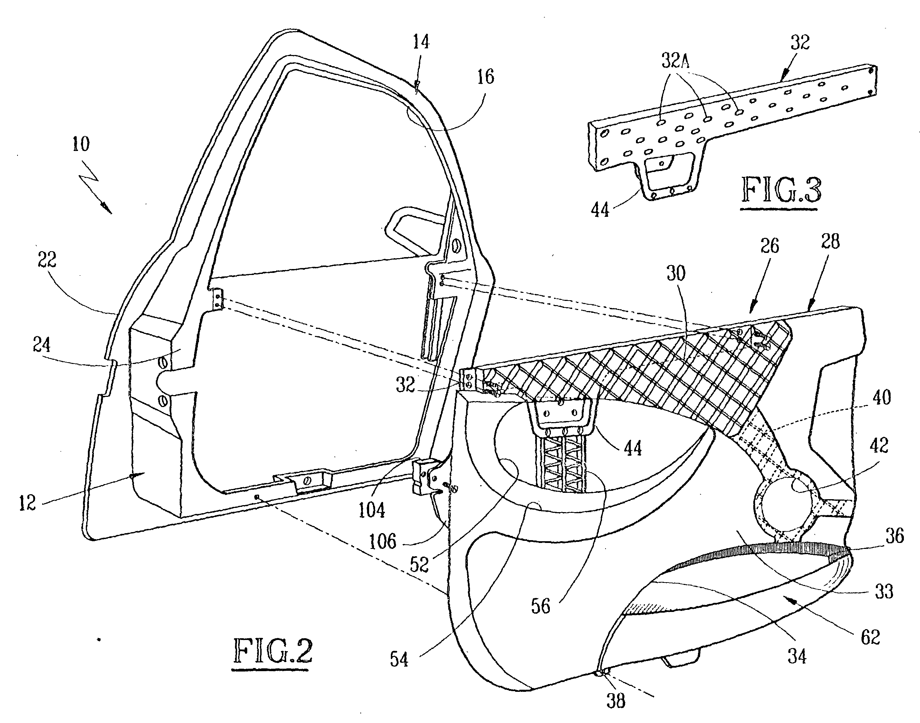

En se référant notamment aux figures 2 à 6, on voit que le caisson 12 comporte une paroi métallique externe 22, une doublure métallique interne 24 et un module 26 fixé sur la doublure 24.

Le module 26 comprend un panneau interne 28 de garnissage de la porte 10. Ce panneau 28, en matériau synthétique, comporte une partie 30 de liaison avec un insert métallique 32 représenté en détail sur la figure 3. Cette partie de liaison 30 a des nervures croisées surmoulées sur l'insert 32. On notera que ce dernier comporte des orifices 32A, traversés par le matériau synthétique de la partie de liaison 30, de manière à former des points d'ancrage de cette partie de liaison 30 sur l'insert 32. Les nervures de la partie de liaison 30 forment une structure alvéolaire de rigidification du panneau de garnissage 28.

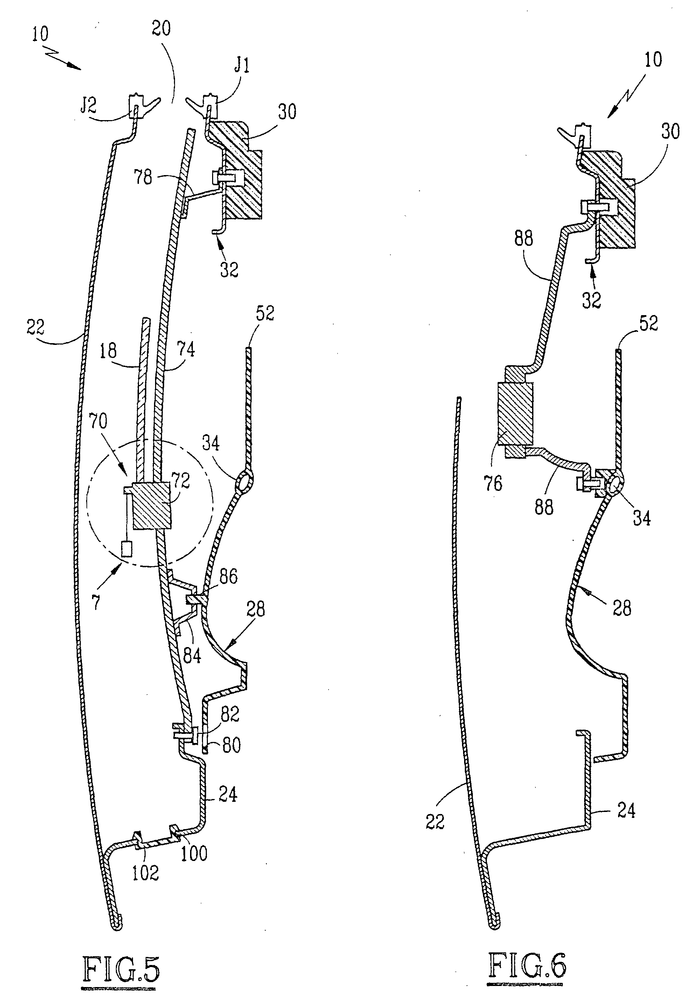

L'insert 32, de forme générale allongée, est fixé sur la doublure 24, par exemple par boulonnage, de manière à délimiter la fente 20 de passage de la vitre 18 (voir notamment figure 5).

On notera que l'insert 32 prolonge la doublure 24 de manière à fermer son contour dans un plan sensiblement parallèle à celui de la porte 10. On notera également que les bords de l'insert 32 et de la paroi externe 22 du caisson délimitant la fente 20 sont munis de joints lécheurs classiques J1,J2 destinés à venir au contact de la vitre 18.

Le panneau de garnissage 28 comporte également une peau 33, destinée à demeurer apparente, venue de matière avec la partie de liaison 30, sans toutefois recouvrir les alvéoles de cette partie de liaison.

La peau 33 est rigidifiée par une nervure 34 s'étendant entre deux pattes 36,38 venues de matière avec le panneau de garnissage 28, formant des points d'ancrage de ce panneau 28 sur la doublure 24.

De préférence, la nervure de rigidification 34 est creuse (voir figures 5 et 6) et est obtenue par un procédé classique de moulage au moyen d'une veine de gaz.

Le panneau de garnissage 28 comporte de plus une partie de renfort 40 ayant des nervures croisées formant une structure alvéolaire de rigidification. Les nervures de cette partie de renfort 40 sont masquées par la peau 33 et venues de matière avec celle-ci. Dans l'exemple illustré, cette partie de renfort 40 entoure un orifice 42 du panneau de garnissage 28 de manière à former un siège de fixation d'un organe, par exemple un haut-parleur, destiné à être logé dans cet orifice 42.

On notera que la partie de renfort 40 s'étend de préférence depuis la partie de liaison 30 jusqu'à la nervure de rigidification 34 qui est venue de matière avec-la peau 33.

En se référant aux figures 2 à 4, on voit que l'insert 32 comprend un prolongement formant un support 44 pour un module 46 à sac gonflable. Le support 44 a par exemple une forme générale de boîtier dans lequel est logé le module 46.

Le module 46 comporte un sac gonflable 48 et un générateur de gaz 50. Ce dernier est fixé directement sur le fond du boîtier, par exemple par boulonnage.

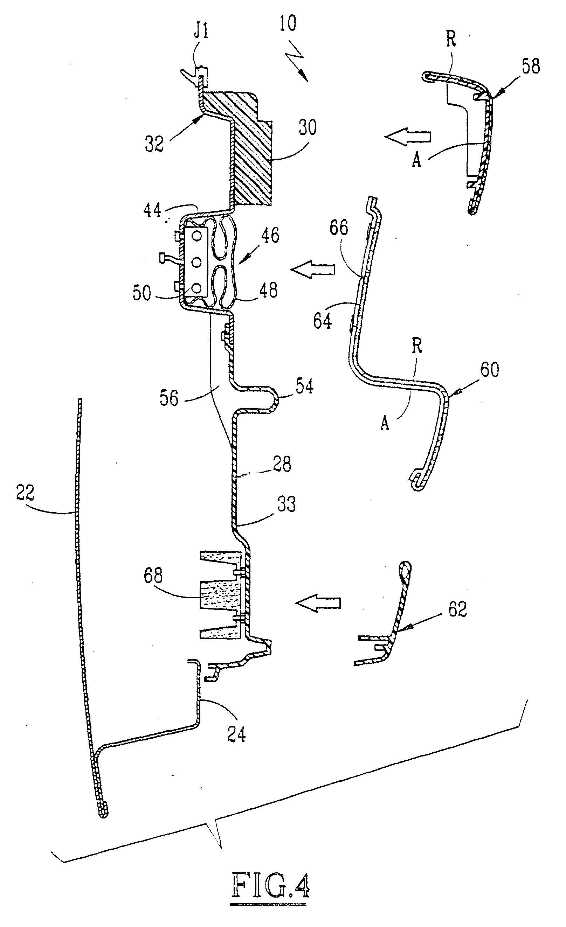

Le boîtier et le module 46 logé dans ce dernier sont agencés au droit d'un ajour 52 du panneau de garnissage 28. Cet ajour 52 s'étend sensiblement entre la partie de liaison 30 et un pli 54 de la peau 33 formant un accoudoir (voir figures 2 et 4) ou une amorce de celui-ci.

Une structure nervurée 56, venue de matière avec le panneau de garnissage 28, est éventuellement surmoulée sur le support 44 formant boîtier, de manière que cette structure 56 s'étende entre le boîtier et le pli 54.

En se référant aux figures 1 et 4, on voit que deux panneaux enjoliveurs 58,60 ainsi qu'un bac de rangement 62 sont rapportés de façon connue en soi, par exemple par bouterollage, vissage ou encliquetage, sur le panneau de garnissage 28.

Le premier panneau enjoliveur 58 est destiné à masquer les alvéoles de la partie de liaison 30. Le second panneau enjoliveur 60 est destiné notamment à obturer l'ajour 52. Ces panneaux enjoliveurs 58,60 comportent, par exemple, une armature A en matériau synthétique munie d'un revêtement d'aspect R, notamment en tissu.

L'armature A du second panneau enjoliveur 60 comporte une plaque formant un ouvrant 64 destiné à s'ouvrir, lors du gonflage du sac 48, par rupture d'une ligne 66 de fragilisation de cet ouvrant (voir figure 4).

Pour augmenter les capacités d'absorption d'énergie lors d'un choc, des masses 68 en matériau classique absorbant l'énergie peuvent être fixées à l'intérieur du caisson 12, par exemple sur le panneau de garnissage 28, comme cela est représenté sur la figure 4.

La vitre 18 est manoeuvrée grâce à un ensemble de lève-vitre 70 représenté sur les figures 5 à 8.

De façon classique cet ensemble de lève-vitre 70 comporte un chariot 72, monté déplaçable sur un rail 74, et un moto-réducteur 76 (voir figure 6), destiné à entraîner ce chariot 72.

Le rail 74 est accroché à l'insert 32 par l'intermédiaire d'une patte 78 et à au moins un élément choisi parmi le panneau de garnissage 28 et la doublure 24, de préférence à ces deux éléments, comme cela est illustré sur la figure 5. On notera que le panneau de garnissage 28 comporte une ouverture 80 permettant l'accès à un boulon 82 ou autre moyen classique de fixation d'une extrémité du rail 74 sur la doublure 24.

Les moyens d'accrochage du rail 74 sur le panneau de garnissage 28 permettent de pré-monter avec jeu de rail sur le module 26 avant de fixer rigidement ce rail 74 sur la doublure 24. Ces moyens d'accrochage comprennent, par exemple, un pontet 84, solidaire du rail 74, monté avec jeu dans un oeillet 86 solidaire du panneau de garnissage.

Le moto-réducteur 76 est accroché à l'insert 32 et à au moins un élément choisi parmi le panneau de garnissage 28 et le rail 74 par l'intermédiaire de pattes 88. De préférence, la patte 88, reliant le moto-réducteur 76 au panneau de garnissage 28, comporte une extrémité fixée sur la nervure de rigidification 34 ou à proximité de celle-ci.

L'ensemble de lève-vitre 70 comprend de plus des moyens 90 d'accrochage de la vitre 18 sur le chariot 72 par encliquetage. Ces moyens d'accrochage 90 sont reliés à des moyens de libération 92 actionnables notamment après l'assemblage complet de la porte.

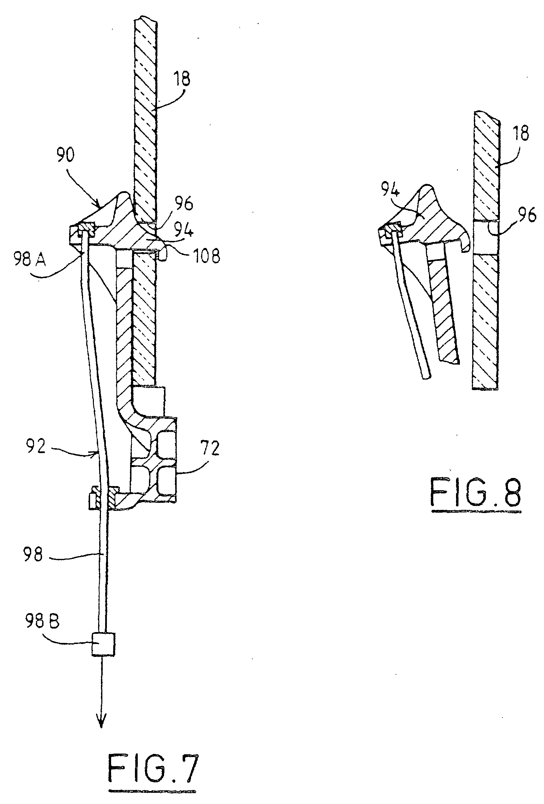

Dans l'exemple illustré, les moyens d'accrochage 90 comprennent un crochet 94 porté par le chariot 72 et rappelé élastiquement en position d'accrochage dans un orifice 96 de la vitre 18 (voir figure 7). Les moyens de libération 92 comprennent un lien 98, notamment un câble, muni d'une extrémité 98A de liaison avec le crochet et d'une extrémité de commande 98B accessible, au moins lorsque la vitre 18 est en position basse, par une ouverture 100 ménagée dans la doublure 24. En tirant sur l'extrémité de commande 8B du lien, on sollicite élastiquement le crochet 94 à rencontre de sa force de rappel de manière à le dégager de l'orifice d'accrochage 96 (voir figure 8).

Un bouchon amovible 102 permet d'obturer l'orifice d'accès 100.

Sur la figure 2, on a représenté une serrure 104 de la porte 10 accrochée avec jeu, à l'aide de moyens classiques, sur un prolongement 106 du panneau de garnissage 28. Ces moyens d'accrochage permettent de pré-monter avec jeu la serrure 104 sur le module 26 avant de fixer rigidement cette serrure 104 sur la doublure 24.

Les opérations de montage de la porte 10 selon l'invention sont très simples.

Tout d'abord, on assemble le module 26 en fixant sur le panneau de garnissage 28 et l'insert 32, le module 46 à sac gonflable, les panneaux enjoliveurs 58,60, le bac de rangement 62, l'ensemble de lève-vitre 70 et, le cas échéant, le haut-parleur ainsi que d'autres organes non décrits. Le rail 74 de l'ensemble de lève-vitre et la serrure 104 sont pré-montés avec jeu sur le panneau de garnissage 28.

Ensuite, on assemble le module 26 sur la doublure 24 de la porte en fixant, sur cette dernière, l'insert 32 et les pattes d'ancrage 36,38. Le rail 74 et la serrure 104 sont rigidement fixés sur la doublure 24, notamment par boulonnage. Le jeu prévu lors du pré-montage du rail 74 et de la serrure 104 permet d'ajuster la position de ces derniers sur la doublure 24 lors de l'assemblage du module 24 avec le reste de la porte.

Enfin, on introduit la vitre 18 dans la fente 20 de manière à l'accrocher sur le chariot 72. Après un escamotage préalable du crochet 94 par coopération du bord de la vitre avec une rampe 108 délimitant ce crochet, ce dernier s'encliquette dans l'orifice d'accrochage 96 de la vitre.

Si l'on souhaite démonter la porte 10, la vitre 18 est séparée du chariot 72 en tirant sur le câble de commande 98 comme décrit plus haut. Le module 26 est séparé du reste de la porte 10 en effectuant des opérations inverses à celles décrites pour son assemblage.

## Revendications

1. Porte de véhicule automobile du type comprenant
une partie inférieure, formant un caisson (12), et une partie supérieure, formant un cadre délimitant une baie (16) obturable par une vitre (18) déplaçable à travers une fente (20) du caisson,
le caisson (12) comportant une paroi métallique externe (22), une doublure métallique interne (24) et un panneau interne de garnissage (28) en matériau synthétique,
**caractérisée en ce que** le panneau de garnissage (28) est surmoulé sur un insert métallique (32), rapporté sur la doublure (24), délimitant la fente (20) de passage de la vitre (18).

2. Porte selon la revendication 1, **caractérisée en ce que** le panneau de garnissage (28) comporte une partie (30) de liaison avec l'insert (32), cette partie de liaison ayant des nervures croisées formant une structure alvéolaire de rigidification du panneau de garnissage.

3. Porte selon la revendication 1 ou 2, **caractérisée en ce que** le panneau de garnissage (28) comporte une nervure de rigidification creuse (34) s'étendant jusqu'à au moins un point d'ancrage (36,38) du panneau de garnissage (28) sur la doublure (24).

4. Porte selon l'une quelconque des revendications précédentes, **caractérisée en ce que** le panneau de garnissage (28) comporte une partie de renfort (40) ayant des nervures croisées formant une structure alvéolaire de rigidification, cette partie de renfort (40) étant masquée par une peau (33) du panneau de garnissage (28) venue de matière avec la partie de renfort (40).

5. Porte selon la revendication 4, **caractérisée en ce que** la partie de renfort (40) entoure un orifice (42) du panneau de garnissage (28) de manière à former un siège de fixation d'un organe destiné à être logé dans cet orifice (42).

6. Porte selon les revendications 3 et 4 prises ensemble, **caractérisée en ce que** la partie de renfort (40) s'étend depuis la partie de liaison (30) jusqu'à la nervure de rigidification (34) qui est venue de matière avec la peau (33).

7. Porte selon l'une quelconque des revendications précédentes, **caractérisée en ce que** l'insert (32) comporte un prolongement formant un support (44) pour un module (46) à sac gonflable (48).

8. Porte selon la revendication 7, **caractérisée en ce que** le module (46) à sac gonflable est recouvert par un panneau enjoliveur (60), rapporté sur le panneau de garnissage (28), comportant un ouvrant (64) destiné à s'ouvrir lors du gonflage du sac (48) par rupture d'une ligne (66) de fragilisation de cet ouvrant (64).

9. Porte selon l'une quelconque des revendications précédentes, **caractérisée en ce qu'**elle comprend un ensemble de lève-vitre (70) comportant un chariot (72) monté déplaçable sur un rail (74), et un moto-réducteur (76) d'entraînement du chariot (72), le rail (74) étant accroché à l'insert (32) et à au moins un élément choisi parmi la doublure (24) et le panneau de garnissage (28), le moto-réducteur (76) étant accroché à l'insert (32) et à au moins un élément choisi parmi le panneau de garnissage (28) et le rail (74).

10. Porte selon la revendication 9, **caractérisée en ce que** l'ensemble de lève-vitre (70) comporte de plus des moyens (90) d'accrochage de la vitre (18) sur le chariot (72) par encliquetage, ces moyens d'accrochage (90) étant reliés à des moyens de libération (92) actionnables après assemblage de la porte.

11. Porte selon la revendication 10, **caractérisée en ce que** les moyens d'accrochage (90) comprennent un crochet (94) rappelé élastiquement en position d'accrochage dans un orifice (96) de la vitre, et **en ce que** les moyens de libération (92) comprennent un lien (98) muni d'une extrémité (98A) de liaison avec le crochet (94) et d'une extrémité de commande (98B) accessible par une ouverture (100) ménagée dans la doublure (24), le crochet (94) étant sollicité élastiquement à l'encontre de sa force de rappel par traction sur l'extrémité de commande (98B) du lien.

12. Module pour porte de véhicule automobile, **caractérisé en ce qu'**il comprend
un panneau interne en matériau synthétique (28) de garnissage de la porte surmoulé sur un insert métallique (32) destiné à être fixé sur une doublure métallique interne (24) de la porte, et
une serrure (104) prémontée avec jeu sur un prolongement (106) du panneau de garnissage (28), cette serrure (104) étant destinée, lors de l'assemblage du module avec le reste de la porte, à être fixée rigidement sur la doublure (24).

13. Module selon la revendication 12, **caractérisé en ce qu'**il comprend de plus un ensemble de lève-vitre (70) muni d'un chariot (72) monté déplaçable sur un rail (74) prémonté avec jeu sur le panneau de garnissage (28), ce rail (74) étant destiné, lors de l'assemblage du module avec le reste de la porte, à être fixé rigidement sur la doublure (24) de la porte.

## Claims

1. Motor vehicle door of the type comprising:
a lower section forming a casing (12), and an upper section forming a frame defining a window opening (16) which may be sealed by a window pane (18) which is displaceable through a slot (20) in the casing,
said casing (12) comprising an outer metal wall (22), an inner metal casing (24) and an inner lining panel (28) made of synthetic material,
**characterised in that** the lining panel (28) is moulded onto a metal insert (32) joined to the inner casing (24) to define the slot (20) for passage of the window pane (18).

2. Door according to Claim 1, **characterised in that** the lining panel (28) comprises a section (30) connecting with the insert (32), said connecting section having cross-ribbing forming a mesh structure for stiffening the lining panel.

3. Door according to Claim 1, **characterised in that** the lining panel (28) comprises a hollow ribbed stiffening arrangement (34) extending at least as far as a point of anchorage (36, 38) of the lining panel (28) on the inner casing (24).

4. Door according to any one of the preceding claims, **characterised in that** the lining panel (28) comprises a reinforcing section (40) having cross-ribbing forming a stiffening mesh structure, said reinforcing section (40) being concealed by a sheet (33) of the lining panel (28) formed in one piece with the reinforcing section (40).

5. Door according to Claim 4, **characterised in that** the reinforcing section (40) surrounds an opening (42) of the lining panel (28) in such a way as to form a seat for securing an element to be disposed in this opening (42).

6. Door according to Claims 3 and 4 taken together, **characterised in that** the reinforcing section (40) extends from the connecting section (30) to the stiffening ribbed arrangement (34), which is formed in one piece with the sheet (33).

7. Door according to any one of the preceding claims, **characterised in that** the insert (32) comprises an extension forming a support (44) for a module (46) for an airbag (48).

8. Door according to Claim 7, **characterised in that** the airbag module (46) is covered by an ornamental panel (60) joined to the lining panel (28) comprising an opening means (64) designed to open when the bag (48) inflates as a result of rupture of a break line (66) of this opening means (64).

9. Door according to any one of the preceding claims, **characterised in that** it comprises a window crank assembly (70) comprising a runner (72) mounted to slide on a rail (74) and a geared motor (76) for actuation of the runner (72), the rail (74) being coupled to the insert (32) and to at least one element selected from the inner casing (24) and the lining panel (28), and said geared motor (76) being coupled to the insert (32) and at least one element selected from the lining panel (28) and the rail (74).

10. Door according to Claim 9, **characterised in that** the window crank assembly (70) additionally comprises means (90) for coupling the window pane (18) to the runner (72) by means of a catch arrangement, said coupling means (90) being connected to release means (92) that may be actuated after assembly of the door.

11. Door according to Claim 10, **characterised in that** the coupling means (90) comprise a latch (94), which is elastically returned to the coupling position in an opening (96) of the window, and **in that** the release means (92) comprise a link (98) fitted with an end (98A) for connecting to the latch (94) and an operating end (98B) accessible via an opening (100) arranged in the inner casing (24), said latch (94) being elastically stressed against its return force by pulling on the operating end (98B) of the link.

12. Module for the door of a motor vehicle, **characterised in that** it comprises
an inner lining panel (28) of the door made of synthetic material moulded onto a metal insert (32) designed to be fastened to an inner metal casing (24) of the door, and
a lock (104) pre-assembled with play on an extension (106) of the lining panel (28), said lock (104) being designed to be rigidly fastened to the inner casing (24) on assembly of the module with the rest of the door.

13. Module according to Claim 12, **characterised in that** it additionally comprises a window crank assembly (70) fitted with a runner (72) mounted to slide on a rail (74) pre-assembled with play on the lining panel (28), said rail (74) being designed to be rigidly fastened to the inner casing (24) of the door on assembly of the module with the rest of the door.

## Patentansprüche

1. Kraftfahrzeugtür, umfassend
- einen einen Kasten (12) bildenden unteren Teil und einen einen Rahmen bildenden oberen Teil, der eine Fensteröffnung (16) abgrenzt, die durch eine Fensterscheibe (18) verschließbar ist, die durch einen Schlitz (20) des Kastens bewegbar ist,
wobei der Kasten (12) eine metallische Außenwand (22), eine metallische Innenverkleidung (24) und eine Innenverkleidungstafel (28) aus Kunststoff aufweist,
**dadurch gekennzeichnet, dass** die Verkleidungstafel (28) auf eine metallische Einlage (32) aufgeformt ist, die an der Verkleidung (24) angebracht ist und den Schlitz (20) für den Durchgang der Fensterscheibe (18) abgrenzt.

2. Tür nach Anspruch 1, **dadurch gekennzeichnet, dass** die Verkleidungstafel (28) einen Teil (30) zur Verbindung mit der Einlage (32) aufweist, der gekreuzte Rippen aufweist, die eine Zellstruktur zur Versteifung der Verkleidungstafel bilden.

3. Tür nach Anspruch 1 oder 2, **dadurch gekennzeichnet, dass** die Verkleidungstafel (28) eine hohle Versteifungsrippe (34) aufweist, die sich mindestens bis zu einem Verankerungspunkt (36, 38) der Verkleidungstafel (28) an der Verkleidung Futter (24) erstreckt.

4. Tür nach einem der vorhergehenden Ansprüche, **dadurch gekennzeichnet, dass** die Verkleidungstafel (28) einen Verstärkungsteil (40) aufweist, der gekreuzte Rippen besitzt, die eine Versteifungszellstruktur bilden, wobei dieser Verstärkungsteil (40) durch eine Außenschicht (33) der Verkleidungstafel (28) abgedeckt ist, die mit dem Verstärkungsteil (40) einstückig ausgeführt ist.

5. Tür nach Anspruch 4, **dadurch gekennzeichnet, dass** der Verstärkungsteil (40) eine Öffnung (42) der Verkleidungstafel (28) umgibt, so dass ein Sitz zur Befestigung eines Organs gebildet wird, das dazu bestimmt ist, in dieser Öffnung (42) untergebracht zu werden.

6. Tür nach den Ansprüchen 3 und 4 zusammen, **dadurch gekennzeichnet, dass** der Verstärkungsteil (40) sich von dem Verbindungsteil (30) bis zu der Versteifungsrippe (34) erstreckt, die mit der Außenschicht (33) einstückig ausgeführt ist.

7. Tür nach einem der vorhergehenden Ansprüche, **dadurch gekennzeichnet, dass** die Einlage (32) eine Verlängerung aufweist, die einen Halter (44) für ein Modul (46) mit einem Airbag (48) bildet.

8. Tür nach Anspruch 7, **dadurch gekennzeichnet, dass** das Airbag-Modul (46) durch eine Zierplatte (60) abgedeckt ist, die an der Verkleidungsplatte (28) angebracht ist und einen Flügel (64) aufweist, der dazu bestimmt ist, sich bei dem Aufblasen des Airbags (48) durch Bruch einer Bruchlinie (66) dieses Flügels (64) zu öffnen.

9. Tür nach einem der vorhergehenden Ansprüche, **dadurch gekennzeichnet, dass** sie eine Fensterheber-Einheit (70) aufweist, die einen Wagen (72), der auf einer Schiene (74) bewegbar montiert ist, und einen Getriebemotor (76) zum Antrieb des Wagens (72) besitzt, wobei die Schiene (74) an der Einlage (32) und an mindestens einem Element eingehakt ist, das aus der Verkleidung (24) und der Verkleidungstafel (28) ausgewählt ist, wobei der Getriebemotor (76) an der Einlage (32) und an mindestens einem Element eingehakt ist, das aus der Verkleidungstafel (28) und der Schiene (74) ausgewählt ist.

10. Tür nach Anspruch 9, **dadurch gekennzeichnet, dass** der Fensterheber (70) außerdem Mittel (90) zum Einhaken der Fensterscheibe (18) an dem Wagen (72) durch Einklinken aufweist, wobei diese Einhakmittel (90) mit Freigabemitteln (92) verbunden sind, die nach Zusammenbau der Tür betätigbar sind.

11. Tür nach Anspruch 10, **dadurch gekennzeichnet, dass** die Einhakmittel (90) einen Haken (94) aufweisen, der elastisch in die Einhakstellung in einer Öffnung (96) der Fensterscheibe zurückgeholt wird, und dass die Freigabemittel (92) ein Band (98) umfassen, das mit einem Ende (98A) zur Verbindung mit dem Haken (94) und mit einem Betätigungsende (98B) versehen ist, das über eine in der Verkleidung (24) vorgesehene Öffnung (100) zugänglich ist, wobei der Haken (94) durch Zug an dem Betätigungsende (98B) des Bandes entgegen seiner Rückholkraft elastisch beaufschlagt wird.

12. Modul für Kraftfahrzeugtür, **dadurch gekennzeichnet, dass** es folgendes aufweist:
eine Innentafel (28) aus Kunststoff zur Verkleidung der Tür, die auf eine metallische Einlage (32) aufgeformt ist, die dazu bestimmt ist, an einer metallischen Innenverkleidung (24) der Tür befestigt zu werden, und
ein Schloss (104), das an einer Verlängerung (106) der Verkleidungstafel (28) mit Spiel vormontiert ist, wobei dieses Schloss (104) dazu bestimmt ist, bei dem Zusammenbau des Moduls mit dem Rest der Tür starr an der Verkleidung (24) befestigt zu werden.

13. Modul nach Anspruch 12 , **dadurch gekennzeichnet, dass** es außerdem eine Fensterheber-Einheit (70) aufweist, die mit einem Wagen (72) versehen ist, der auf einer Schiene (74) bewegbar montiert ist, die auf der Verkleidungstafel (28) vormontiert ist, wobei diese Schiene (74) dazu bestimmt ist, bei dem Zusammenbau des Moduls mit dem Rest der Tür an der Verkleidung (24) der Tür starr befestigt zu werden.
